# EUROPEAN PATENT SPECIFICATION

(11) **EP 1 429 569 B1**
(45) Date of publication and mention of the grant of the patent: **09.03.2011**
(21) Application number: 03028486.3
(22) Date of filing: 12.12.2003
(51) Int. Cl.: H04W 8/24

(54) **Mobile station and method for selectively downloading components of a software by comparing component specific version numbers**
Mobilstation und Verfahren zum selektiven Runterladen von Komponenten einer Software durch Vergleich von komponentenspezifischen Versionsnummern
Station mobile et méthode pour télécharger sélectivement des composants d'un logiciel en comparant les spécifiques nombres de version des composants

(30) Priority: 13.12.2002 US 318809
(43) Date of publication of application: 16.06.2004
(73) Proprietor: SAMSUNG ELECTRONICS CO., LTD., Suwon-si, Gyeonggi-cho (KR)
(72) Inventor: Kincaid, Jason R. c/o Samsung Electronics Co. Ltd., Suwon-si Gyeonggi-cho (KR)
(74) Representative: Grünecker, Kinkeldey, Stockmair & Schwanhäusser Anwaltssozietät

(56) References cited:
- EP-A- 0 459 344
- EP-A- 0 991 290
- US-A- 5 974 312
- US-A- 6 023 620
- US-A1- 2002 077 094
- US-B1- 6 487 723

## Description

The present invention is directed generally to upgradeable wireless communication systems and, more specifically, to a centralized component manager for supervising the downloading and installation of software modules in a wireless mobile station.

In order to increase the wireless market to the greatest extent possible, wireless service providers and wireless equipment manufacturers constantly seek new ways to make wireless equipment and services as convenient, user-friendly, and affordable as possible. To that end, wireless service providers and the manufacturers of cell phones and other wireless mobile stations frequently work together to streamline procedures for enrolling and equipping new subscribers and for improving the services and equipment of existing subscribers.

One important aspect of these efforts involves over-the-air (OTA) provisioning and upgrading of wireless mobile stations, such as cell phones, wireless personal digital assistants (PDAs), wireless hand-held computers, two-way pagers, and the like. OTA provisioning is a relatively new feature that enables a new subscriber who purchases a new cell phone (or other mobile station) to set-up an account with a wireless service provider and to configure the phone for operation. The OTA provisioning procedure is mostly automated and does not require the new subscriber to visit a cell phone service center. Typically, the new subscriber removes the new cell phone from its box, calls a special purpose telephone number (given in the instructions), and performs an interactive provisioning procedure with an automated agent or a human service representative.

Over-the-air upgrading of wireless mobile stations also is a relatively new procedure that enables a subscriber to download and install upgraded software containing patches, bug fixes, and newer versions of mobile station software, including the operating system.

The wireless service provider or the mobile station manufacturer, or both, may provide the upgraded software.

It has long been possible to download and to install software upgrades for a personal computer (PC) via the Internet. However, this process is considerably more complicated in a mobile station. A personal computer has far more resources available to perform a software upgrade, including dynamically linked libraries (DLLs), a memory management unit (MMU), and a large random access memory (RAM) space. A conventional PC software upgrade may be partitioned and downloaded to a personal computer as a group of shared objects.

If one object file is corrupted or interrupted during transmission, only that object file needs to be re-transmitted. The object files that are properly received do not need to be re-transmitted. Once all object files are present, the memory management unit (MMU) of the PC loads all of the object files into RAM and re-links the object files to form a DLL. The DLL may then be stored back into ROM (i.e., disk) in the PC. During this process, the MMU is capable of modifying portions of the code or the symbol table.

However, a wireless mobile station (e.g., a cell phone) typically has far fewer resources available than a PC. Mobile stations lack a memory management unit and code is not executed from RAM. Code is executed out of a Flash memory that acts as a read-only memory (ROM). The Flash memory generally cannot be written to, it can only be re-programmed with great difficulty. These resource limitations greatly complicate software upgrade operations in wireless mobile stations.

Therefore, there is a need in the art for improved systems and methods for performing automatic software upgrades of wireless handsets and other types of mobile stations. In particular, there is a need for a centralized component manager that supervises the organization and installation of software components in a wireless communication device in a manner that enables the easy upgrade and replacement of such components.

US-6,023,620 describes a method for downloading control software to a cellular telephone which has two memories for storing software. One memory stores the current software and the second memory is available for downloading new software.

US-6,487,723 B1 describes a system for downloading different versions of software or data modules into a plurality of terminals having different compatibility interfaces.

EP-0 459 344 A1 describes an apparatus for loading software for a telecommunications terminal.

US-5,974,312 describes a system and method for updating a memory in an electronic device wireless data transfer.

It is the object of the present invention to provide a mobile station capable of wirelessly receiving software files from a software upgrade server via a wireless communication network.

This object is solved by the subject matters of the independent claims.

Preferred embodiments are defined in the dependent claims.

According to an advantageous embodiment of the present invention, the mobile station comprises: 1) a memory capable of storing the received software files in a plurality of download modules, wherein each download module (DLM) comprises a plurality of related components that operate together to perform a particular function; and 2) a DLM controller associated with the memory capable of determining a version identifier associated with each component in each of the plurality of download modules, wherein the controller is further capable of comparing a first group of version identifiers associated with a first plurality of related components in a first download module with corresponding version identifiers associated with the first plurality of related component that are contained in a list of latest component versions.

According to one embodiment of the present invention, the controller is capable of requesting and receiving the list of latest component versions from the software upgrade server.

According to another embodiment of the present invention, the controller, in response to the comparison, identifies ones of the first plurality of related components for which newer component versions are available.

According to still another embodiment of the present invention, the controller is capable of transmitting a request message to the software upgrade server requesting the transfer of the newer component versions of the identified related components for which newer component versions are available.

According to yet another embodiment of the present invention, the controller is further capable of determining an interdependency between a first identified related component in the first download module and a dependent component in a second download module.

According to a further embodiment of the present invention, the controller is further capable of comparing a version identifier associated with the dependent component in the second download module with a corresponding version identifier associated with the dependent component that is contained in the list of latest component versions.

According to a still further embodiment of the present invention, the controller, in response to the comparison, is capable of transmitting a request message to the software upgrade server requesting the transfer of a newer component version of the dependent related component if the newer component version is available.

According to a yet further embodiment of the present invention, the related components in the first download module is of a different data type than the other related components in the first download module.

In one embodiment of the present invention, the related components comprise at least one of i) resources data, ii) graphics data, iii) strings data, and iv) executable code.

In another embodiment of the present invention, the controller requests the list of latest component versions from the software upgrade server in response to a triggering event, the triggering event comprising at least one of: i) receipt of an operator input; 2) receipt of a notification message from the software upgrade server; and iii) expiration of a timer in the mobile station.

The foregoing has outlined rather broadly the features and technical advantages of the present invention so that those skilled in the art may better understand the detailed description of the invention that follows. Additional features and advantages of the invention will be described hereinafter that form the subject of the claims of the invention. Those skilled in the art should appreciate that they may readily use the conception and the specific embodiment disclosed as a basis for modifying or designing other structures for carrying out the same purposes of the present invention. Those skilled in the art should also realize that such equivalent constructions do not depart from the scope of the invention in its broadest form.

Before undertaking the detailed description of the invention below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

For a more complete understanding of the present invention, and the advantages thereof, reference is now made to the following descriptions taken in conjunction with the accompanying drawings, wherein like numbers designate like objects, and in which:
FIGURE 1 illustrates an exemplary wireless network according to one embodiment of the present invention;
FIGURE 2 illustrates in greater detail an exemplary mobile station having a download module manager according to one embodiment of the present invention;
FIGURE 3 illustrates download modules (DLMs) in the download module space in the memory of the exemplary mobile station according to one embodiment of the present invention; and
FIGURE 4 is a flow diagram illustrating the operation of the download module manager in the exemplary mobile station according to one embodiment of the present invention.

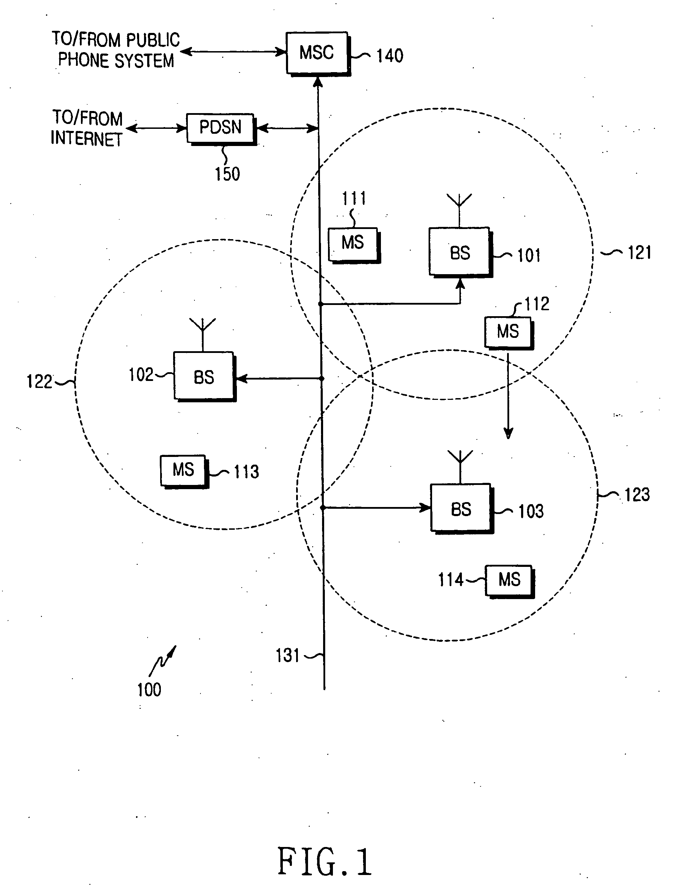

FIGURES 1 through 4, discussed below, and the various embodiments used to describe the principles of the present invention in this patent document are by way of illustration only and should not be construed in any way to limit the scope of the invention. Those skilled in the art will understand that the principles of the present invention may be implemented in any suitably arranged wireless mobile station.

FIGURE 1 illustrates exemplary wireless network 100 according to one embodiment of the present invention. Wireless network 100 comprises a plurality of cell sites 121-123, each containing one of the base stations, BS 101, BS 102, or BS 103. Base stations 101-103 communicate with a plurality of mobile stations (MS) 111-114 over code division multiple access (CDMA) channels. Mobile stations 111-114 may be any suitable wireless devices, including conventional cellular radiotelephones, PCS handset devices, personal digital assistants, portable computers, or metering devices. The present invention is not limited to mobile devices. Other types of access terminals, including fixed wireless terminals, may be used. However, for the sake of simplicity, only mobile stations are shown and discussed hereafter.

Dotted lines show the approximate boundaries of the cell sites 121-123 in which base stations 101-103 are located. The cell sites are shown approximately circular for the purposes of illustration and explanation only. It should be clearly understood that the cell sites may have other irregular shapes, depending on the cell configuration selected and natural and man-made obstructions.

As is well known in the art, cell sites 121-123 are comprised of a plurality of sectors (not shown), each sector being illuminated by a directional antenna coupled to the base station. The embodiment of FIGURE 1 illustrates the base station in the center of the cell. Alternate embodiments position the directional antennas in corners of the sectors. The system of the present invention is not limited to any particular cell site configuration.

In one embodiment of the present invention, BS 101, BS 102, and BS 103 comprise a base station controller (BSC) and one or more base transceiver subsystem(s) (BTS). Base station controllers and base transceiver subsystems are well known to those skilled in the art. A base station controller is a device that manages wireless communications resources, including the base transceiver stations, for specified cells within a wireless communications network. A base transceiver subsystem comprises the RF transceivers, antennas, and other electrical equipment located in each cell site. This equipment may include air conditioning units, heating units, electrical power supplies, telephone line interfaces, and RF transmitters and RF receivers. For the purpose of simplicity and clarity in explaining the operation of the present invention, the base transceiver subsystem in each of cells 121, 122, and 123 and the base station controller associated with each base transceiver subsystem are collectively represented by BS 101, BS 102 and BS 103, respectively.

BS 101, BS 102 and BS 103 transfer voice and data signals between each other and the public switched telephone network (PSTN) (not shown) via communication line 131 and mobile switching center MSC) 140. BS 101, BS 102 and BS 103 also transfer data signals, such as packet data, with the Internet (not shown) via communication line 131 and packet data server node (PDSN) 150. Line 131 also provides the connection path to transfers control signals between MSC 140 and BS 101, BS 102 and BS 103 used to establish connections for voice and data circuits between MSC 140 and BS 101, BS 102 and BS 103.

Communication line 131 may be any suitable connection means, including a T1 line, a T3 line, a fiber optic link, a network packet data backbone connection, or any other type of data connection. Line 131 links each vocoder in the BSC with switch elements in MSC 140. Those skilled in the art will recognize that the connections on line 131 may provide a transmission path for transmission of analog voice band signals, a digital path for transmission of voice signals in the pulse code modulated (PCM) format, a digital path for transmission of voice signals in an Internet Protocol (IP) format, a digital path for transmission of voice signals in an asynchronous transfer mode (ATM) format, or other suitable connection transmission protocol. Those skilled in the art will recognize that the connections on line 131 may provide a transmission path for transmission of analog or digital control signals in a suitable signaling protocol.

MSC 140 is a switching device that provides services and coordination between the subscribers in a wireless network and external networks, such as the PSTN or Internet. MSC 140 is well known to those skilled in the art. In some embodiments of the present invention, communications line 131 may be several different data links where each data link couples one of BS 101, BS 102, or BS 103 to MSC 140.

In the exemplary wireless network 100, MS 111 is located in cell site 121 and is in communication with BS 101. MS 113 is located in cell site 122 and is in communication with BS 102. MS 114 is located in cell site 123 and is in communication with BS 103. MS 112 is also located close to the edge of cell site 123 and is moving in the direction of cell site 123, as indicated by the direction arrow proximate MS 112. At some point, as MS 112 moves into cell site 123 and out of cell site 121, a hand-off will occur.

As is well known, the hand-off procedure transfers control of a call from a first cell site to a second cell site. As MS 112 moves from cell 121 to cell 123, MS 112 detects the pilot signal from BS 103 and sends a Pilot Strength Measurement Message to BS 101. When the strength of the pilot transmitted by BS 103 and received and reported by MS 112 exceeds a threshold, BS 101 initiates a soft hand-off process by signaling the target BS 103 that a handoff is required as described in TIA/EIA IS-95 or TIA/EIA IS-2000.

BS 103 and MS 112 proceed to negotiate establishment of a communications link in the CDMA channel. Following establishment of the communications link between BS 103 and MS 112, MS 112 communicates with both BS 101 and BS 103 in a soft handoff mode. Those acquainted with the art will recognize that soft hand-off improves the performance on both forward (BS to MS) channel and reverse (MS to BS) channel links. When the signal from BS 101 falls below a predetermined signal strength threshold, MS 112 may then drop the link with BS 101 and only receive signals from BS 103. The call is thereby seamlessly transferred from BS 101 to BS 103. The above-described soft hand-off assumes the mobile station is in a voice or data call. An idle hand-off is the hand-off between cells sites of a mobile station that is communicating in the control or paging channel.

Any or all of the mobile stations in wireless network 100 may be upgraded by means of an over-the-air (OTA) upgrade procedure that transfers new software to the mobile stations from a remote upgrade server (not shown) that is accessed via the Internet. According to the principles of the present invention, each mobile station comprises a download module (DLM) manager that provides centralized management of all software components that are installed in the mobile station. As used herein, the term "upgrade" refers not only to the download and installation of patches and improvements to already existing software, but also refers to the download and installation of software applications that are entirely new.

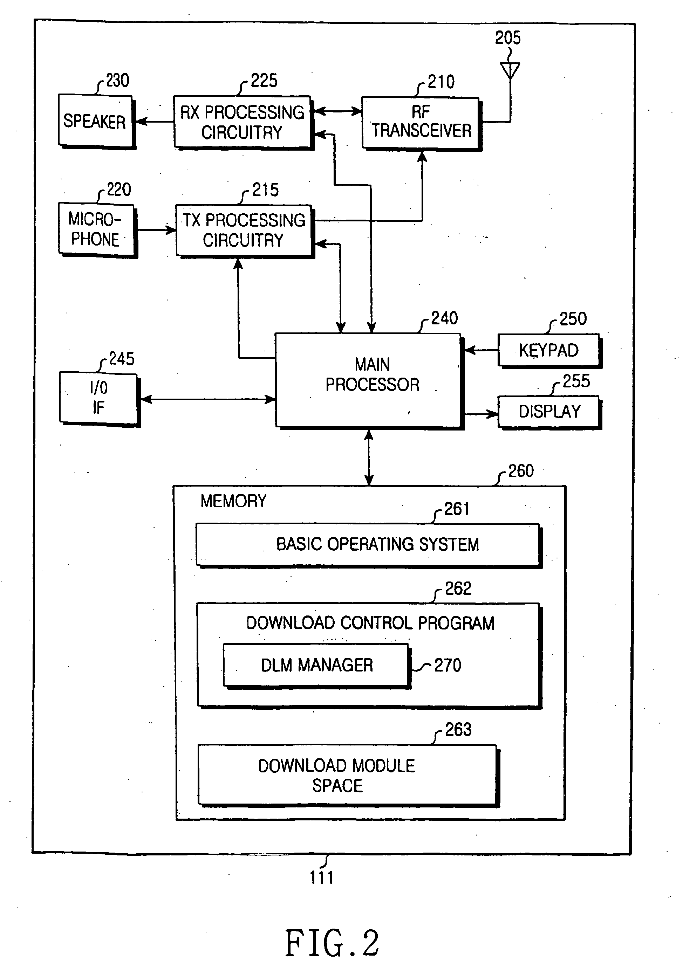

FIGURE 2 illustrates in greater detail exemplary mobile station 111, which comprises a download module manager according to one embodiment of the present invention. Wireless mobile station 111 comprises antenna 205, radio frequency (RF) transceiver 210, transmit (TX) processing circuitry 215, microphone 220, and receive (RX) processing circuitry 225. MS 111 also comprises speaker 230, main processor 240, input/output (I/O) interface (IF) 245, keypad 250, display 255, and memory 260. Memory 260 further comprises basic operating system (OS) program 261, download control program 262, and download module (DLM) space 263. Download control program 262 further comprises download module (DLM) manager program 270, which is a subroutine that supervises the downloading, the organization, and the installation of various download modules that may be retrieved from an Internet accessible remote server in an over-the-air (OTA) upgrade procedure.

Radio frequency (RF) transceiver 210 receives from antenna 205 an incoming RF signal transmitted by a base station of wireless network 100. Radio frequency (RF) transceiver 210 down-converts the incoming RF signal to produce an intermediate frequency (IF) or a baseband signal. The IF or baseband signal is sent to receiver (RX) processing circuitry 225 that produces a processed baseband signal by filtering, decoding, and/or digitizing the baseband or IF signal to produce a processed baseband signal. Receiver (RX) processing circuitry 225 transmits the processed baseband signal to speaker 230 (i.e., voice data) or to main processor 240 for further processing (e.g., web browsing).

Transmitter (TX) processing circuitry 215 receives analog or digital voice data from microphone 220 or other outgoing baseband data (e.g., web data, e-mail, interactive video game data) from main processor 240. Transmitter (TX) processing circuitry 215 encodes, multiplexes, and/or digitizes the outgoing baseband data to produce a processed baseband or IF signal. Radio frequency (RF) transceiver 210 receives the outgoing processed baseband or IF signal from transmitter (TX) processing circuitry 215. Radio frequency (RF) transceiver 210 up-converts the baseband or IF signal to a radio frequency (RF) signal that is transmitted via antenna 205.

In an advantageous embodiment of the present invention, main processor 240 is a microprocessor or microcontroller. Memory 260 is coupled to main processor 240. According to an advantageous embodiment of the present invention, part of memory 260 comprises a random access memory (RAM) and another part of memory 260 comprises a Flash memory, which acts as a read-only memory (ROM).

Main processor 240 executes basic operating system (OS) program 261 stored in memory 260 in order to control the overall operation of wireless mobile station 111. In one such operation, main processor 240 controls the reception of forward channel signals and the transmission of reverse channel signals by radio frequency (RF) transceiver 210, receiver (RX) processing circuitry 225, and transmitter (TX) processing circuitry 215, in accordance with well-known principles.

Main processor 240 is capable of executing other processes and programs resident in memory 260, including download control program 262 and DLM manager program 270. Main processor 240 can move data into or out of memory 260, as required by an executing process. Main processor 240 is also coupled to I/O interface 245. I/O interface 245 provides mobile station 111 with the ability to connect to other devices such as laptop computers and handheld computers. I/O interface 245 is the communication path between these accessories and main controller 240.

Main processor 240 is also coupled to keypad 250 and display unit 255. The operator of mobile station 111 uses keypad 250 to enter data into mobile station 111. Display 255 may be a liquid crystal display capable of rendering text and/or at least limited graphics from web sites. Alternate embodiments may use other types of displays.

In accordance with the principles of the present invention, main processor 240 also receives and installs download modules containing software upgrades and patches under the control of download control program 262. This may be done in an over-the-air (OTA) upgrade procedure that may be initiated by any conventional triggering event, such as an operator-initiated action, an automated periodic procedure (i.e., expiration of a timer in MS 111), or receipt of a notification message from a remote upgrade server (not shown).

In response to any of these triggering events, and under the control of download control program 262 and DLM manager program 270, main processor 240 establishes a communication link to wireless network 100 and to the remote server via the Internet connection of wireless network 100. When the communication link is established, main processor 240 requests a list of available upgrades for a mobile station of its type. The remote server responds with a list of upgrade programs and the resource needs (i.e., memory space, processor speed) of those upgrade programs. Advantageously, the communication protocol between MS 111 and the upgrade server allows DLM manager program 270 to authenticate connections to valid servers and to verify the integrity of received data, such as by means of an MD5 checksum algorithm with secure key encryption.

According to an exemplary embodiment of the present invention, download control program 262 is primarily responsible for establishing and maintaining a session connection to the remote server. Once the connection is established, DLM manager program 270 supervises the identification, selection, transfer, storage, installation and configuration of various software components in the download modules. DLM manager program 270 maintains a table of DLM descriptors and a set of components for each download module (DLM). Each component type has a set of operators that can manage data reads, data writes, deletions, installations, and initializations. In other words, data of type X in all DLMs may be stored to flash memory, data of type Y may be stored to the file system, data of type Z may be stored to EEPROM, and so forth. DLM manager program 270 stores in its database a file handle for each component and calls type-specific operators to execute it. Thus, type-specific operators perform all operations on the data, although the database of components is maintained by DLM manager program 270.

DLM manager program 270 references the DLM descriptors to keep track of component revisions and to identify component interdependencies whenever upgrade components are available. DLM manager program 270 also maintains a status list of DLM downloads in progress. DLM manager program 270 does not identify a download operation as complete unless the corresponding entry in the status list is flagged as "DONE." New components are not installed until the entire set of components has been stored and old components are kept in mobile station 111 until the new components have been installed. Advantageously, DLM manager program 270 optimizes the use of memory space by using knowledge of software component sizes to place small components in appropriately sized ROM holes and keeping large holes contiguous for subsequent placement of large components.

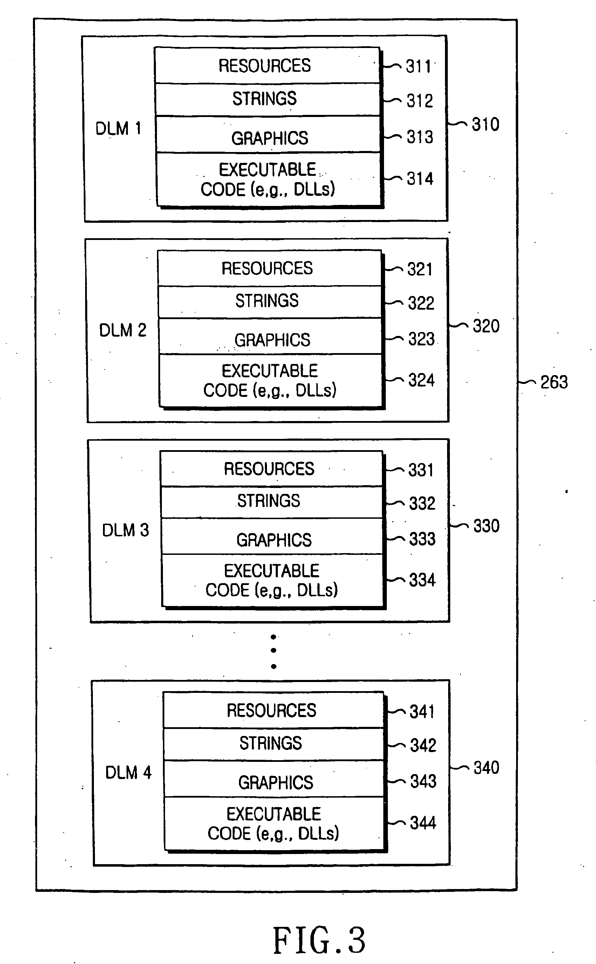

FIGURE 3 illustrates download modules (DLMs) in download module (DLM) space 263 in memory 260 of exemplary mobile station 111 according to one embodiment of the present invention. DLM space 263 stores a plurality of download modules (DLMs), including exemplary download modules 310, 320, 330 and 340. Download module (DLM) 310, download module (DLM) 320, download module (DLM) 330 and download module (DLM) 340 may also be referred to hereafter as DLM1, DLM2, DLM3, and DLM4, respectively.

Each one of download modules 310, 320, 330 and 340 is comprised of several different components, which are intended to operate together. For example, DLM 310 comprises resources component 311, strings component 312, graphics component 313, and executable code component 314. Similarly, DLM 320 comprises resources component 321, strings component 322, graphics component 323, and executable code component 324 and DLM 330 comprises resources component 331, strings component 332, graphics component 333, and executable code component 334. Finally, DLM 340 comprises resources component 341, strings component 342, graphics component 343, and executable code component 344.

While the specific types of operations performed on each component may vary, the categories of operations (e.g., load, install, identify contents, etc.) do not. As a result, DLM manager program 270 may bootstrap DLMs (i.e., simultaneously load all components) wherever one of them is reference, without explicit commands from the operator. Also, DLM manager program 270 is able to use its knowledge of component dependencies and component revisions to determine the minimal set of components required for downloading as well as the correct order for downloading.

For example, suppose that, in DLM 310, resources component 311 is Version 1.1.15, strings component 312 is Version 1.1.10, graphics component 313 is Version 1.1.31, and executable code component 314 is Version 1.1.44. DLM manager program 270 may request and receive a list of the latest components from the remote server and determine that the latest version of resources component 311 is Version 1.1.15, the latest version of strings component 312 is Version 1.1.18, the latest version of graphics component 313 is Version 1.1.31, and the latest version of executable code component 314 is Version 1.1.50. Since only strings component 312 and executable code component 314 have changed, DLM manager program 270 only requests those components from the remote server.

Moreover, if DLM manager program 270 determines that one of the components in DLM 210 that must be upgraded is dependent on a second component in another download module, such as DLM 220, DLM 230 or DLM 240, then DLM manager program 270 also requests the download of the latest version of that second component. This process is reiterated until the latest versions of all dependent components are obtained.

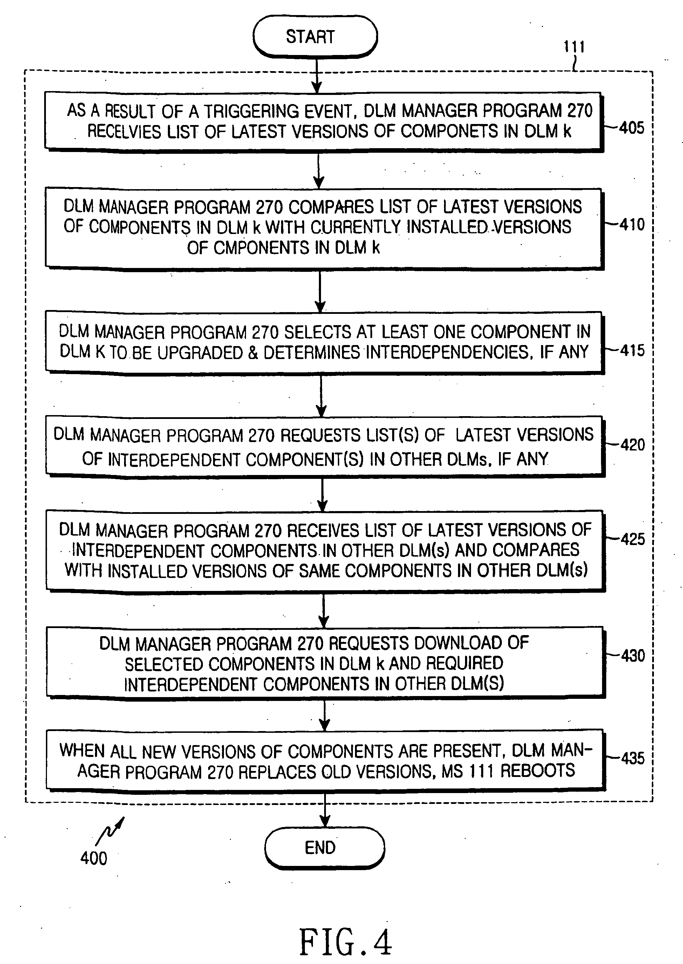

FIGURE 4 depicts flow diagram 400, which illustrates the operation of download module manager 270 in exemplary mobile station 111 according to one embodiment of the present invention. As a result of a triggering event, DLM manager program 270 receives a list of the latest versions of components in DLM k (process step 405). DLM k may be, for example, DLM 1, DLM 2, DLM 3 or DLM 4. Next, DLM manager program 270 compares the list of the latest versions of the components in DLM k with the currently installed versions of those components in DLM k (process step 410). DLM manager program 270 then selects at least one component in DLM k to be upgraded and determines the interdependencies of the selected component, if any (process step 415). DLM manager program 270 requests the list(s) of the latest versions of the interdependent component(s) in other DLM(s), if any (process step 420).

DLM manager program 270 then receives the lists of the latest versions of the interdependent components in other DLM(s) and compares them with the installed versions of the same components in the other DLM(s) (process step 425). Next, DLM manager program 270 requests the download of the selected components in DLM k and all of the required interdependent components in the other DLM(s) (process step 430). When all the new versions of all of the requested components are present, DLM manager program 270 replaces the old versions. Eventually, MS 111 is rebooted and the new components are executed thereafter (process step 435).

Although the present invention has been described in detail, those skilled in the art should understand that they can make various changes, substitutions and alterations herein without departing from the scope of the invention as defined by the claims.

## Claims

1. A mobile station for wirelessly receiving software files from a software upgrade server via a wireless communication network (100), said mobile station comprising:
a memory (260, 263) for storing said received software files; and
a download module controller (262, 270) associated with said memory,
**characterized in that**
said memory is for storing said received software files in a plurality of download modules (310, 320, 330, 340), wherein each download module comprises a plurality of related components (311-314, 321-324, 331-334, 341-344) that operate together to perform a particular function, and
said download module controller is for determining a version identifier associated with each component in each of said plurality of download modules, wherein said controller is further for comparing a first group of version identifiers associated with a first plurality of related components in a first download module with corresponding version identifiers associated with said first plurality of related components that are contained in a list of latest component versions.

2. The mobile station as set forth in Claim 1 wherein said controller is for requesting and receiving said list of latest component versions from said software upgrade server.

3. The mobile station as set forth in Claim 2 wherein said controller, in response to said comparison, identifies ones of said first plurality of related components for which newer component versions are available.

4. The mobile station as set forth in Claim 3 wherein said controller is for transmitting a request message to said software upgrade server requesting the transfer of said newer component versions of said identified related components for which newer component versions are available.

5. The mobile station as set forth in Claim 4 wherein said controller is further for determining an interdependency between a first identified related component in said first download module and a dependent component in a second download module.

6. The mobile station as set forth in Claim 5 wherein said controller is further for comparing a version identifier associated with said dependent component in said second download module with a corresponding version identifier associated with said dependent component that is contained in said list of latest component versions.

7. The mobile station as set forth in Claim 6 wherein said controller is for transmitting a request message to said software upgrade server requesting the transfer of a newer component version of said dependent related component if said newer component version is available.

8. The mobile station as set forth in one of Claims 1 to 7 wherein each of said related components in said first download module is of a different data type than the other related components in said first download module.

9. The mobile station as set forth in Claim 8 wherein said related components comprise at least one of i) resources data, ii) graphics data, iii) strings data, and iv) executable code.

10. The mobile station as set forth in Claim 2 wherein said controller is adapted to request said list of latest component versions from said software upgrade server in response to a triggering event, said triggering event comprising at least one of:
receipt of an operator input;
receipt of a notification message from said software upgrade server; and
expiration of a timer in said mobile station.

11. A method for upgrading software in a mobile station (111) capable of wirelessly receiving software files from a software upgrade server via a wireless communication network (100), the method being for use in said mobile station, the method **characterized by** the steps of:
storing the received software files in a memory (260, 263) as a plurality of download modules (310, 320, 330, 340), wherein each download module comprises a plurality of related components (311-314, 321-324, 331-334, 341-344) that operate together to perform a particular function; and
determining a version identifier associated with each component in each of the plurality of download modules;
comparing (410) a first group of version identfiers associated with a first plurality of related components in a first download module with corresponding version identifiers associated with the first plurality of related components that are contained in a list of latest component versions.

12. The method as set forth in Claim 11 further comprising the steps of requesting and receiving the list of latest component versions from the software upgrade server.

13. The method as set forth in Claim 12 further comprising the step, in response to the step of comparing, of identifying ones of the first plurality of related components for which newer component versions are available.

14. The method as set forth in Claim 13 further comprising the step of transmitting a request message to the software upgrade server requesting the transfer of the newer component versions of the identified related components for which newer component versions are available.

15. The method as set forth in Claim 14 further comprising the step of determining an interdependency between a first identified related component in the first download module and a dependent component in a second download module.

16. The method as set forth in Claim 15 further comprising the step of comparing a version identifier associated with the dependent component in the second download module with a corresponding version identifier associated with the dependent component that is contained in the list of latest component versions.

17. The method as set forth in Claim 16 further comprising the step of transmitting a request message to the software upgrade server requesting the transfer of a newer component version of the dependent related component if the newer component version is available.

18. The method as set forth in one of Claims 11 to 17 wherein each of the related components in the first download module is of a different data type than the other related components in the first download module.

19. The method as set forth in Claim 18 wherein the related components comprise at least one of i) resources data, ii) graphics data, iii) strings data, and iv) executable code.

20. The method as set forth in Claim 12 wherein the step of requesting the list of latest component versions from the software upgrade server occurs in response to a triggering event, the triggering event comprising at least one of:
receipt of an operator input;
receipt of a notification message from the software upgrade server; and
expiration of a timer in the mobile station.

## Patentansprüche

1. Mobilstation zum drahtlosen Empfangen von Software-Dateien von einem Software-Upgrade-Server über ein Drahtlos-Kommunikationsnetz (100), wobei die Mobilstation umfasst:
einen Speicher (260, 263) zum Speichern der empfangenen Software-Dateien; und
eine Download-Modul-Steuereinrichtung (262, 270), die mit dem Speicher verbunden ist,
**dadurch gekennzeichnet, dass**
der Speicher dazu dient, die empfangenen Software-Dateien in einer Vielzahl von Download-Modulen (310, 320, 330, 340) zu speichern, wobei jedes Download-Modul eine Vielzahl zusammenhängender Komponenten (311-314, 321-324, 331-334, 341-344) umfasst, die zusammenwirken, um eine bestimmte Funktion zu erfüllen, und
die Download-Modul-Steuereinrichtung dazu dient, eine mit jeder Komponente in jeder der Vielzahl von Download-Modulen verknüpfte Versions-Kennung zu bestimmen, die Steuereinrichtung des Weiteren dazu dient, eine erste Gruppe von Versions-Kennungen, die mit einer ersten Vielzahl zusammenhängender Komponenten in einem ersten Download-Modul verknüpft sind, mit entsprechenden Versions-Kennungen zu vergleichen, die mit der ersten Vielzahl zusammenhängender Komponenten verknüpft sind, die in einer Liste aktuellster Komponenten-Versionen enthalten sind.

2. Mobilstation nach Anspruch 1, wobei die Steuereinrichtung dazu dient, die Liste aktuellster Komponenten-Versionen von dem Software-Upgrade-Server anzufordern und zu empfangen.

3. Mobilstation nach Anspruch 2, wobei die Steuereinrichtung in Reaktion auf den Vergleich diejenigen der ersten Vielzahl zusammenhängender Komponenten identifiziert, für die neuere Komponenten-Versionen verfügbar sind.

4. Mobilstation nach Anspruch 3, wobei die Steuereinrichtung dazu dient, eine Anforderungsnachricht zu dem Software-Upgrade-Server zu senden, die die Übertragung der neueren Komponenten-Versionen der identifizierten zusammenhängenden Komponenten anfordert, für die neuere Komponenten-Versionen verfügbar sind.

5. Mobilstation nach Anspruch 4, wobei die Steuereinrichtung des Weiteren dazu dient, eine gegenseitige Abhängigkeit einer ersten identifizierten zusammenhängenden Komponente in dem ersten Download-Modul und einer abhängigen Komponente in einem zweiten Download-Modul zu bestimmen.

6. Mobilstation nach Anspruch 5, wobei die Steuereinrichtung des Weiteren dazu dient, eine Versions-Kennung, die mit der abhängigen Komponente in dem zweiten Download-Modul zusammenhängt, mit einer entsprechenden Versions-Kennung zu vergleichen, die mit der abhängigen Komponente verknüpft ist, die in der Liste aktuellster Komponenten-Versionen enthalten ist.

7. Mobilstation nach Anspruch 6, wobei die Steuereinrichtung dazu dient, eine Anforderungsnachricht zu dem Software-Upgrade-Server zu senden, die die Übertragung einer neueren Komponenten-Version der abhängigen zusammenhängenden Komponente anfordert, wenn die neuere Komponenten-Version verfügbar ist.

8. Mobilstation nach einem der Ansprüche 1 bis 7, wobei jede der zusammenhängenden Komponenten in dem ersten Download-Modul von einem anderen Datentyp ist als die anderen zusammenhängenden Komponenten in dem ersten Download-Modul.

9. Mobilstation nach. Anspruch 8, wobei die zusammenhängenden Komponenten I) Ressourcen-Daten, II) Grafik-Daten, III) String-Daten oder/und IV) ausführbaren Code umfassen.

10. Mobilstation nach Anspruch 2, wobei die Steuereinrichtung so eingerichtet ist, dass sie die Liste aktuellster Komponenten-Versionen von dem Software-Upgrade-Server in Reaktion auf ein Auslöseereignis anfordert, wobei das Auslöseereignis wenigstens umfasst:
Empfang einer Bedienereingabe;
Empfang einer Mitteilungsnachricht von dem Software-Upgrade-Server; und
Ablauf eines Zeitgliedes in der Mobilstation.

11. Verfahren zum Upgraden von Software in einer Mobilstation (111), die in der Lage ist, drahtlos Software-Dateien von einem Software-Upgrade-Server über ein Drahtlos-Kommunikationsnetz (100) zu empfangen, wobei das Verfahren für den Einsatz in der Mobilstation bestimmt ist und das Verfahren **dadurch gekennzeichnet ist, dass** es die folgenden Schritte umfasst:
Speichern der empfangenen Software-Dateien in einem Speicher (260, 263) als eine Vielzahl von Download-Modulen (310, 320, 330, 340), wobei jedes Download-Modul eine Vielzahl zusammenhängender Komponenten (311-314, 321-324, 331-334, 341-344) umfasst, die zusammenwirken, um eine bestimmte Funktion zu erfüllen; und
Bestimmen einer Versions-Kennung, die mit jeder Komponente in jedem der Vielzahl von Download-Modulen verknüpft ist;
Vergleichen (410) einer ersten Gruppe von Versions-Kennungen, die mit einer ersten Vielzahl zusammenhängender Komponenten in einem ersten Download-Modul verknüpft sind, mit entsprechenden Versions-Kennungen, die mit der ersten Vielzahl zusammenhängender Komponenten verknüpft sind, die in einer Liste aktuellster Komponenten-Versionen enthalten sind.

12. Verfahren nach Anspruch 11, das des Weiteren die Schritte des Anforderns und Empfangens der Liste aktuellster Komponenten-Versionen von dem Software-Upgrade-Server umfasst.

13. Verfahren nach Anspruch 12, das des Weiteren den Schritt umfasst, in dem in Reaktion auf den Schritt des Vergleichens diejenigen der ersten Vielzahl zusammenhängender Komponenten identifiziert werden, für die neuere Komponenten-Versionen verfügbar sind.

14. Verfahren nach Anspruch 13, das des Weiteren den Schritt des Sendens einer Anforderungsnachricht zu dem Software-Upgrade-Server umfasst, die die Übertragung der neueren Komponenten-Versionen der identifizierten zusammenhängenden Komponenten anfordert, für die neuere Komponenten-Versionen verfügbar sind.

15. Verfahren nach Anspruch 14, das des Weiteren den Schritt des Bestimmens einer gegenseitigen Abhängigkeit einer ersten identifizierten zusammenhängenden Komponente in dem ersten Download-Modul und einer abhängigen Komponente in einem zweiten Download-Modul umfasst.

16. Verfahren nach Anspruch 15, das des Weiteren den Schritt des Vergleichens einer Versions-Kennung, die mit der abhängigen Komponente in dem zweiten Download-Modul verknüpft ist, mit einer entsprechenden Versions-Kennung umfasst, die mit der abhängigen Komponente verknüpft ist, die in der Liste aktuellster Komponenten-Versionen enthalten ist.

17. Verfahren nach Anspruch 16, das des Weiteren den Schritt des Sendens einer Anforderungsnachricht zu dem Software-Upgrade-Server umfasst, die die Übertragung einer neueren Komponenten-Version der abhängigen zusammenhängenden Komponente anfordert, wenn die neuere Komponenten-Version verfügbar ist.

18. Verfahren nach einem der Ansprüche 11 bis 17, wobei jede der zusammenhängenden Komponenten in dem ersten Download-Modul von einem anderen Datentyp ist als die anderen zusammenhängenden Komponenten in dem ersten Download-Modul.

19. Verfahren nach Anspruch 18, wobei die zusammenhängenden Komponenten I) Ressourcen-Daten, II) Grafik-Daten, III) String-Daten oderlund IV) ausführbaren Code umfassen.

20. Verfahren nach Anspruch 12, wobei der Schritt des Anforderns der Liste aktuellster Komponenten-Versionen von dem Software-Upgrade-Server in Reaktion auf ein Auslöseereignis stattfindet, wobei das Auslöseereignis wenigstens umfasst:
Empfang einer Bedienereingabe;
Empfang einer Mitteilungsnachricht von dem Software-Upgrade-Server; und
Ablauf eines Zeitgliedes in der Mobilstation.

## Revendications

1. Station mobile pour recevoir sans fil des fichiers de logiciel d'un serveur de mise à niveau de logiciel par l'intermédiaire d'un réseau de communication sans fil (100), ladite station mobile comprenant :
une mémoire (260, 263) pour enregistrer lesdits fichiers de logiciel reçus ; et
un contrôleur de module de téléchargement (262, 270) associé à ladite mémoire,
**caractérisé en ce que**
ladite mémoire est destinée à enregistrer lesdits fichiers de logiciel reçus dans une pluralité de modules de téléchargement (310, 320, 330, 340), chaque module de téléchargement comprenant une pluralité de composants associés (311 à 314, 321 à 324, 331 à 334, 341 à 344) qui agissent ensemble pour exécuter une fonction particulière, et
ledit contrôleur de module de téléchargement est destiné à déterminer un identifiant de version associé à chaque composant de chaque module de ladite pluralité de modules de téléchargement, dans lequel ledit contrôleur est destiné en outre à comparer un premier groupe d'identifiants de version associés à une première pluralité de composants associés dans un premier module de téléchargement avec des identifiants de version correspondants associés à ladite première pluralité de composants associés qui sont contenus dans une liste de versions les plus récentes des composants.

2. Station mobile selon la revendication 1, dans laquelle ledit contrôleur est destiné à demander et à recevoir ladite liste de versions les plus récentes des composants auprès dudit serveur de mise à niveau de logiciel.

3. Station mobile selon la revendication 2, dans laquelle ledit contrôleur, en réponse à ladite comparaison, identifie un composant de ladite première pluralité de composants associés pour lequel des versions plus récentes des composants sont disponibles.

4. Station mobile selon la revendication 3, dans laquelle ledit contrôleur est destiné à transmettre un message de demande audit serveur de mise à niveau de logiciel demandant le transfert desdites versions plus récentes des composants desdits composants identifiés associés pour lesquels des versions plus récentes des composants sont disponibles.

5. Station mobile selon la revendication 4, dans laquelle ledit contrôleur est destiné en outre à déterminer une interdépendance entre un premier composant identifié associé dans ledit premier module de téléchargement et un composant dépendant dans un deuxième module de téléchargement.

6. Station mobile selon la revendication 5, dans laquelle ledit contrôleur est destiné en outre à comparer un identifiant de version associé audit composant dépendant dans ledit deuxième module de téléchargement avec un identifiant de version correspondant associé audit composant dépendant, contenu dans ladite liste de versions de composant les plus récentes.

7. Station mobile selon la revendication 6, dans laquelle ledit contrôleur est destiné à transmettre un message de demande audit serveur de mise à niveau de logiciel demandant le transfert d'une version de composant plus récente dudit composant associé dépendant si ladite version de composant plus récente est disponible.

8. Station mobile selon l'une des revendications 1 à 7, dans laquelle chacun desdits composants associés dans ledit premier module de téléchargement est d'un type de données différent de celui des autres composants associés dans ledit premier module de téléchargement.

9. Station mobile selon la revendication 8, dans laquelle lesdits composants associés comprennent au moins un élément parmi i) des données de ressources, ii) des données graphiques, iii) des données de chaîne et iv) du code exécutable.

10. Station mobile selon la revendication 2, dans laquelle ledit contrôleur est adapté à demander ladite liste de versions les plus récentes des composants auprès dudit serveur de mise à niveau de logiciel en réponse à un événement de déclenchement, ledit événement de déclenchement comprenant au moins un événement parmi :
la réception d'une entrée de l'opérateur ;
la réception d'un message de notification provenant dudit serveur de mise à niveau de logiciel ; et
l'expiration d'une temporisation dans ladite station mobile.

11. Procédé de mise à niveau d'un logiciel dans une station mobile (111) capable de recevoir sans fil des fichiers de logiciel provenant d'un serveur de mise à niveau de logiciel par l'intermédiaire d'un réseau de communication sans fil (100), le procédé étant destiné à être utilisé dans ladite station mobile, le procédé étant **caractérisé par** les étapes consistant à :
enregistrer les fichiers de logiciel reçus dans une mémoire (260, 263) sous forme d'une pluralité de modules de téléchargement (310, 320, 330, 340), chaque module de téléchargement comprenant une pluralité de composants associés (311 à 314, 321 à 324, 331 à 334, 341 à 344) qui agissent ensemble pour exécuter une fonction particulière ; et
déterminer un identifiant de version associé à chaque composant dans chaque module de la pluralité de modules de téléchargement ;
comparer (410) un premier groupe d'identifiants de version associés à une première pluralité de composants associés dans un premier module de téléchargement avec des identifiants de version correspondants associés à la première pluralité de composants associés qui sont contenus dans une liste de versions les plus récentes des composants.

12. Procédé selon la revendication 11, comprenant en outre les étapes de demande et de réception de la liste de versions les plus récentes des composants auprès du serveur de mise à niveau de logiciel.

13. Procédé selon la revendication 12, comprenant en outre, en réponse à l'étape de comparaison, l'étape d'identification d'un composant de la première pluralité de composants associés pour lequel des versions plus récentes des composants sont disponibles.

14. Procédé selon la revendication 13, comprenant en outre l'étape de transmission d'un message de demande au serveur de mise à niveau de logiciel demandant le transfert des versions plus récentes des composants des composants identifiés associés pour lesquels des versions plus récentes des composants sont disponibles.

15. Procédé selon la revendication 14, comprenant en outre l'étape de détermination d'une interdépendance entre un premier composant identifié associé dans le premier module de téléchargement et un composant dépendant dans un deuxième module de téléchargement.

16. Procédé selon la revendication 15, comprenant en outre l'étape de comparaison d'un identifiant de version associé au composant dépendant dans le deuxième module de téléchargement avec un identifiant de version correspondant associé au composant dépendant, contenu dans la liste de versions de composant les plus récentes.

17. Procédé selon la revendication 16, comprenant en outre l'étape de transmission d'un message de demande au serveur de mise à niveau de logiciel demandant le transfert d'une version de composant plus récente du composant associé dépendant si la version de composant plus récente est disponible.

18. Procédé selon l'une des revendications 11 à 17, dans lequel chacun des composants associés dans le premier module de téléchargement est d'un type de données différent de celui des autres composants associés dans le premier module de téléchargement.

19. Procédé selon la revendication 18, dans lequel les composants associés comprennent au moins un élément parmi i) des données de ressources, ii) des données graphiques, iii) des données de chaîne et iv) du code exécutable.

20. Procédé selon la revendication 12, dans lequel l'étape de demande de la liste de versions les plus récentes des composants auprès du serveur de mise à niveau de logiciel s'effectue en réponse à un événement de déclenchement, l'événement de déclenchement comprenant au moins un événement parmi :
la réception d'une entrée de l'opérateur ;
la réception d'un message de notification provenant du serveur de mise à niveau de logiciel ; et
l'expiration d'une temporisation dans la station mobile.
